(19) Europäisches Patentamt
European Patent Office
Office européen des brevets

(11)　EP 2 175 168 A1

(12)　**EUROPÄISCHE PATENTANMELDUNG**

(43) Veröffentlichungstag:
　　**14.04.2010  Patentblatt 2010/15**

(51) Int Cl.:
　　**F16H 41/04** *(2006.01)*

(21) Anmeldenummer: **09171924.5**

(22) Anmeldetag: **01.10.2009**

(84) Benannte Vertragsstaaten:
　　**AT BE BG CH CY CZ DE DK EE ES FI FR GB GR
　　HR HU IE IS IT LI LT LU LV MC MK MT NL NO PL
　　PT RO SE SI SK SM TR**

(30) Priorität: **08.10.2008　DE 102008042665**

(71) Anmelder: **ZF Friedrichshafen AG
　　88038 Friedrichshafen (DE)**

(72) Erfinder:
　　• **Sasse, Dr., Christoph
　　　97422 Schweinfurt (DE)**
　　• **Mencher, Georg
　　　97506 Grafenrheinfeld (DE)**
　　• **Sueck, Gregor
　　　97526 Sennfeld (DE)**

(54)　**Hydrodynamischer Drehmomentwandler**

(57)　Bei einem hydrodynamischen Drehmoment-wandler, insbesondere für den Antriebsstrang eines Fahrzeugs, umfassend eine mit Fluid gefüllte oder füllbare Gehäuseanordnung (12) mit einem Pumpenrad (24) mit einer Mehrzahl von um eine Drehachse (A) in Umfangsrichtung aufeinander folgenden Pumpenradschaufeln (22), in einem Gehäuseinnenraum (20) ein Turbinenrad (26) mit einer Mehrzahl von in Umfangsrichtung um die Drehachse (A) aufeinander folgenden Turbinenradschaufeln (28) und ein Leitrad (34) mit in Umfangsrichtung um die Drehachse (A) aufeinander folgenden Leitradschaufeln (38), wobei das Pumpenrad (24), das Turbinenrad (26) und das Leitrad (34) einen Fluidzirkulationstorus (T) mit einem radial bezüglich der Drehachse (A) betrachteten Torusdurchmesser Td, einem auf die Drehachse (A) bezogenen Außenradius Ra und einer in Richtung der Drehachse (A) betrachteten Torusbreite B bilden, gilt:

$$0,25 < Td/Ra < 0,45$$

oder/und

$$0,25 < B/Ra < 0,45,$$

und gilt ferner:

$$zp > 35,$$

wobei zp die Anzahl der Pumpenradschaufeln (22) ist, oder/und

$$zt > 31,$$

wobei zt die Anzahl der Turbinenradschaufeln (28) ist.

Fig. 1

EP 2 175 168 A1

**Beschreibung**

Die vorliegende Erfindung betrifft einen hydrodynamischen Drehmomentwandler, wie er im Antriebsstrang eines Kraftfahrzeugs eingesetzt werden kann. Ein derartiger hydrodynamischer Drehmomentwandler umfasst eine mit Fluid gefüllte oder füllbare Gehäuseanordnung mit einem Pumpenrad mit einer Mehrzahl von um eine Drehachse in Umfangsrichtung aufeinander folgenden Pumpenradschaufeln, in einem Gehäuseinnenraum ein Turbinenrad mit einer Mehrzahl von in Umfangsrichtung um die Drehachse aufeinander folgenden Turbinenradschaufeln und ein Leitrad mit in Umfangsrichtung um die Drehachse aufeinander folgenden Leitradschaufeln, wobei das Pumpenrad, das Turbinenrad und das Leitrad einen Fluidzirkulationstorus mit einem radial bezüglich der Drehachse betrachteten Torusdurchmesser Td, einem auf die Drehachse bezogenen Außenradius Ra und einer in Richtung der Drehachse betrachteten Torusbreite B bilden.

Aus der EP 0 070 662 A1 ist ein hydrodynamischer Drehmomentwandler bekannt, für welchen für eine Vielzahl von Maßangaben bzw. deren Verhältnisse optimale Werte angegeben sind. So ist beispielsweise für das Verhältnis zwischen der in Richtung der Drehachse betrachteten bzw. gemessenen Breite und dem Torusaußendurchmesser dieses bekannten hydrodynamischen Drehmomentwandlers ein optimaler Wertebereich von 0,5 bis 1 angegeben. Dabei sollte das Verhältnis der radialen Höhe, also der radialen Ausdehnung des Torus, zur Breite, also der axialen Länge, im Bereich von 0,88 bis 1 liegen, was bedeutet, dass der Fluidzirkulationstorus eine näherungsweise kreisartige Außenkontur aufweisen kann.

Es ist die Zielsetzung der vorliegenden Erfindung, einen hydrodynamischen Drehmomentwandler vorzusehen, der bei möglichst geringer radialer Baugröße einen optimierten Spitzenwirkungsgrad aufweist.

Erfindungsgemäß wird diese Aufgabe gelöst durch einen hydrodynamischen Drehmomentwandler, insbesondere für den Antriebsstrang eines Fahrzeugs, umfassend eine mit Fluid gefüllte oder füllbare Gehäuseanordnung mit einem Pumpenrad mit einer Mehrzahl von um eine Drehachse in Umfangsrichtung aufeinander folgenden Pumpenradschaufeln, in einem Gehäuseinnenraum ein Turbinenrad mit einer Mehrzahl von in Umfangsrichtung um die Drehachse aufeinander folgenden Turbinenradschaufeln und ein Leitrad mit in Umfangsrichtung um die Drehachse aufeinander folgenden Leitradschaufeln, wobei das Pumpenrad, das Turbinenrad und das Leitrad einen Fluidzirkulationstorus mit einem radial bezüglich der Drehachse betrachteten Torusdurchmesser Td, einem auf die Drehachse bezogenen Außenradius Ra und einer in Richtung der Drehachse betrachteten Torusbreite B bilden, wobei gilt:

$$0,25 < Td/Ra < 0,45$$
oder/und

$$0,25 < B/Ra < 0,45,$$

und wobei ferner gilt:

$$zp > 35,$$
wobei $zp$ die Anzahl der Pumpenradschaufeln ist,
oder/und
$$zt > 31,$$
wobei $zt$ die Anzahl der Turbinenradschaufeln ist.

Durch die Auswahl der Turbinenradschaufeln oder/und der Pumpenradschaufeln in dem jeweils angegebenen Wertebereich wird in Zuordnung zu den durch den radialen Torusdurchmesser bzw. die axiale Torusbreite bezüglich des Außenradius des Torus definierten geometrischen Verhältnisse eine Erhöhung des Spitzenwirkungsgrads erzielt.

Dabei ist vorzugsweise der Fluidzikulationstorus mit im Wesentlichen kreisartiger Außenkontur aufgebaut. Dies kann beispielsweise dadurch erlangt werden, dass gilt:

$$0,8 < B/(Ra-Ri) < 1,2,$$

wobei Ri ein auf die Drehachse bezogener Torusinnenradius des Fluidzirkulationstorus ist.

Die vorliegende Erfindung wird nachfolgend mit Bezug auf die beiliegenden Fig. detailliert beschrieben. Es zeigt:

Fig. 1     eine Teil-Längsschnittansicht eines hydrodynamischen Drehmomentwandlers;

Fig. 2     ein Diagramm, welches aufgetragen über dem Verhältnis des radialen Torusdurchmessers zum Außenradius des Torus einen Spitzenwirkungsgrad eines hydrodynamischen Drehmomentwandlers darstellt;

Fig. 3     ein Diagramm, welches aufgetragen über der Schaufelzahl eines Turbinenrads bzw. eines Pumpenrads den Spitzenwirkungsgrad veranschaulicht.

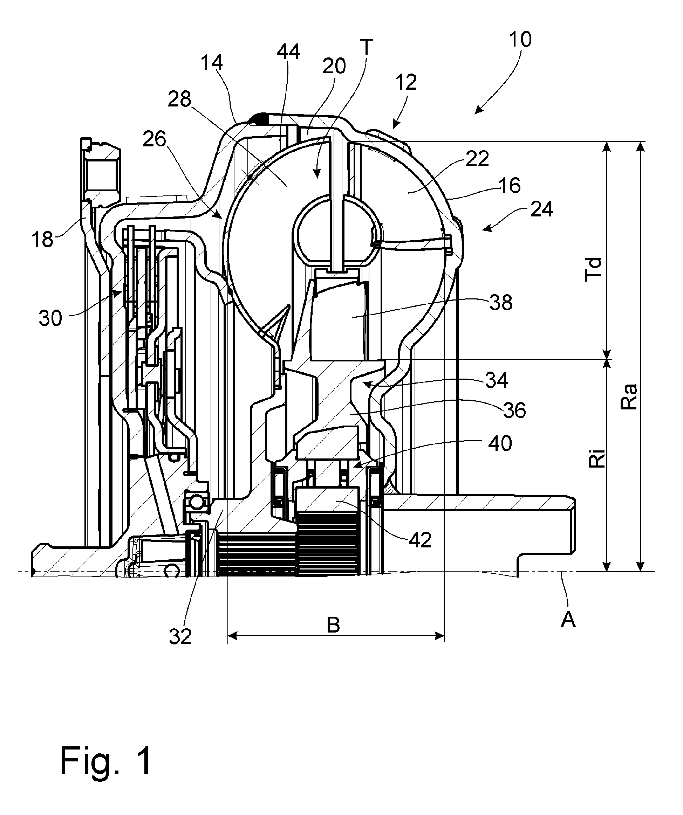

In der Fig. 1 ist ein hydrodynamischer Drehmomentwandler allgemein mit 10 bezeichnet. Dieser umfasst eine Gehäuseanordnung 12 mit einer motorseitigen Gehäuseschale 14 und einer getriebeseitigen Gehäuseschale 16. Die motorseitige Gehäuseschale 14 kann über eine Kopplungsbaugruppe 18 mit einer nicht dargestellten Antriebswelle, also beispielsweise einer Kurbelwelle einer Brennkraftmaschine, zur gemeinsamen Drehung um eine Drehachse A gekoppelt werden.

Die getriebeseitige Gehäuseschale 16 trägt an ihrer einem Gehäuseinnenraum 20 zugewandten Seite eine Mehrzahl von Pumpenradschaufeln 22 und bildet mit diesen ein Pumpenrad 24. Im Gehäuseinnenraum 20 ist weiterhin ein Turbinenrad 26 angeordnet, welches den Pumpenradschaufeln axial gegenüber liegend eine Mehrzahl von in Umfangsrichtung aufeinander folgenden Turbinenradschaufeln 28 trägt. Das Turbinenrad 26 kann über eine Überbrückungskupplung 30, ggf. unter Zwischenpositionierung eines Torsionsschwingungsdämpfers, an die Gehäuseanordnung 12 angekoppelt werden. Als Abtriebsorgan weist das Turbinenrad 26 eine Turbinenradnabe 32 auf, die mit einer nicht dargestellten Getriebeeingangswelle zur gemeinsamen Drehung um die Drehachse A gekoppelt werden kann.

Axial zwischen dem Pumpenrad 24 und dem Turbinenrad 26 ist ein Leitrad 34 angeordnet. Dieses trägt auf einem Leitradring 36 eine Mehrzahl von in Umfangsrichtung um die Drehachse A aufeinander folgenden Leitradschaufeln 38. Der Leitradring 36 ist über eine Freilaufanordnung 40 und eine Leitradnabe 42 auf einer nicht dargestellten Stützhohlwelle zur Drehung um die Drehachse A in einer Drehrichtung getragen. Die Leitradschaufeln 38 liegen zwischen dem radial inneren, abströmseitigen Endbereich der Turbinenradschaufeln 28 und den radial inneren, anströmseitigen Endbereichen der Pumpenradschaufeln 22. Deren radial äußere, abströmseitige Endbereiche liegen den radial äußeren, anströmseitigen Endbereichen der Turbinenradschaufeln 28 axial gegenüber.

Durch das Turbinenrad 26, insbesondere eine Turbinenradschale 44 desselben, das Leitrad 34, insbesondere den Leitradring 36 desselben, und das Pumpenrad 24, insbesondere die getriebeseitige Gehäuseschale 16, wird ein allgemein mit T bezeichneter Fluidzirkulationstorus definiert, der im dargestellten Beispiel eine in Richtung der Drehachse A betrachtete axiale Breite B und einen in Richtung radial zur Drehachse A betrachteten Torusdurchmesser Td aufweist. Dieser entspricht im Wesentlichen der Differenz zwischen einem auf die Drehachse A bezogenen Torusaußenradius Ra und einem ebenfalls auf die Drehachse A bezogenen Torusinnenradius Ri.

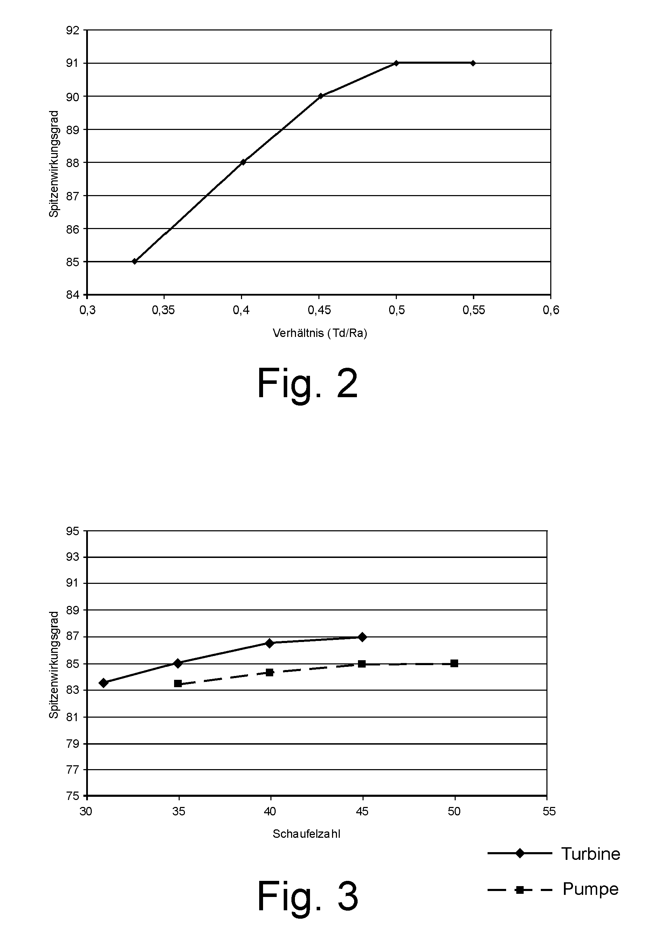

Die Fig. 2 zeigt den Spitzenwirkungsgrad eines derartigen hydrodynamischen Drehmomentwandlers 10 in Abhängigkeit von einem Verhältnis Td/Ra. Man erkennt, dass mit zunehmendem Verhältnis bis zu einem Wert von etwa 0,5 der Spitzenwirkungsgrad ansteigt und dann in einen Sättigungsbereich übergeht. Dies würde es an sich nahelegen, zum Erreichen eines möglichst hohen Spitzenwirkungsgrads den hydrodynamischen Drehmomentwandler 10 so aufzubauen, dass das Verhältnis Td/Ra bei etwa 0,5 liegt. Dies bedeutet jedoch, dass der Wandler grundsätzlich eine vergleichsweise große Außenabmessung aufweisen muss, um dieses Verhältnis realisieren zu können, insbesondere auch dann, wenn der Fluidzirkulationstorus T eine näherungsweise kreisförmige Außenkontur haben soll, also allgemein gelten soll, dass die Größen Td und B näherungsweise gleich sind.

Mit den Prinzipien der vorliegenden Erfindung wird ein derartiger hydrodynamischer Drehmomentwandler 10 kompakter ausgestaltet, um der zunehmend auftretenden Anforderung nach möglichst geringem Bauraum Rechnung tragen zu können. Dies bedeutet, dass gemäß den Prinzipien der vorliegenden Erfindung das Verhältnis Td/Ra oder/und das Verhältnis B/Ra in einem Bereich von 0,25 bis 0,45 liegen soll. Dies hat, wie die Fig. 2 dies veranschaulicht, zur Folge, dass, bezogen auf diese Verhältnisse nicht mit einem optimalen Wirkungsgrad gearbeitet wird.

Um dies zu kompensieren ist jedoch bei der vorliegenden Erfindung vorgesehen, dass die Anzahl der Schaufeln des Turbinenrads größer als 31, also mindestens 32 ist, oder/und die Anzahl der Pumpenradschaufeln größer als 35, also mindestens 36 ist. Hierzu veranschaulicht die Fig. 3, dass mit zunehmender Anzahl der Turbinenradschaufeln 28 bzw. der Pumpenradschaufeln 22 der Spitzenwirkungsgrad deutlich variiert.

In diesem Diagramm wurde bei der Ermittlung der Variation des Spitzenwirkungsgrads durch Änderung der Anzahl der Turbinenradschaufeln 28 die Anzahl der Pumpenradschaufeln 22 bei 35 gewählt, während bei der Ermittlung der Variation in Abhängigkeit von der Anzahl der Pumpenradschaufeln 22 die Anzahl der Turbinenradschaufeln 28 bei 31 eingestellt wurde.

Durch die Erhöhung der Anzahl der Turbinenradschaufeln 28, vorzugsweise in Kombination mit der Erhöhung der Anzahl der Pumpenradschaufeln 22 kann also eine Erhöhung des Spitzenwirkungsgrads erreicht werden, welche die zum Einsparen von Bauraum in Kauf genommene Reduktion des Spitzenwirkungsgrads zumindest teilweise kompensieren kann. So hat sich gezeigt, dass bei einem Verhältnis Td/Ra von etwa 0,35 mit 50 Pumpenradschaufeln 22 und 45 Turbinenradschaufeln 28 ein Wirkungsgrad von etwa 90% erreicht werden kann.

**Patentansprüche**

1. Hydrodynamischer Drehmomentwandler, insbesondere für den Antriebsstrang eines Fahrzeugs, umfassend eine mit Fluid gefüllte oder füllbare Gehäuseanordnung (12) mit einem Pumpenrad (24) mit einer Mehrzahl von um eine Drehachse (A) in Umfangsrichtung aufeinander folgenden Pumpenradschaufeln (22), in einem Gehäuseinnenraum (20) ein Turbinenrad (26) mit einer Mehrzahl von in Umfangsrichtung um die Drehachse (A) aufeinander folgenden Turbinenradschaufeln (28) und ein Leitrad (34) mit in Umfangsrichtung um die Drehachse (A) aufeinander folgenden Leitradschaufeln (38), wobei das Pumpenrad (24), das Turbinenrad (26) und das Leitrad (34) einen Fluidzirkulationstorus (T) mit einem radial bezüglich der Drehachse (A) betrachteten Torusdurchmesser Td, einem auf die Drehachse (A) bezogenen Außenradius Ra und einer in Richtung der Drehachse (A) betrachteten Torusbreite B bilden, wobei gilt:

0,25 < Td/Ra < 0,45
oder/und
0,25 < B/Ra < 0,45,

und wobei ferner gilt:

zp > 35,
wobei zp die Anzahl der Pumpenradschaufeln (22) ist,
oder/und
zt > 31,
wobei zt die Anzahl der Turbinenradschaufeln (28) ist.

2. Hydrodynamischer Drehmomentwandler nach Anspruch 1,
**dadurch gekennzeichnet, dass** der Fluidzirkulationstorus (T) eine im Wesentlichen kreisartige Außenkontur aufweist.

3. Hydrodynamischer Drehmomentwandler nach Anspruch 1 oder 2,
**dadurch gekennzeichnet, dass** gilt:

i. 0,8 < B/(Ra-Ri) < 1,2,

wobei Ri ein auf die Drehachse (A) bezogener Torusinnenradius des Fluidzirkulationstorus (T) ist.

Fig. 1

# Fig. 2

# Fig. 3

Europäisches
Patentamt

European
Patent Office

Office européen
des brevets

**EUROPÄISCHER RECHERCHENBERICHT**

Nummer der Anmeldung

EP 09 17 1924

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2005 308099 A (TOYOTA MOTOR CORP) 4. November 2005 (2005-11-04) * Abbildungen 1-3 * ----- | 1-3 | INV. F16H41/04 |
| Y | EP 0 070 662 A1 (BORG WARNER [US]) 26. Januar 1983 (1983-01-26) * Seite 1, Zeile 14 * * Seite 2, Zeile 1 - Zeile 9 * * Ansprüche 3,5 * ----- | 1-3 | |
| Y | DE 103 59 625 A1 (EXEDY CORP [JP]) 15. Juli 2004 (2004-07-15) * Absätze [0004], [0009] * ----- | 1-3 | |

RECHERCHIERTE SACHGEBIETE (IPC)

F16H

Der vorliegende Recherchenbericht wurde für alle Patentansprüche erstellt

| Recherchenort | Abschlußdatum der Recherche | Prüfer |
|---|---|---|
| München | 5. Februar 2010 | Belz, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 1924

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2010

| Im Recherchenbericht angeführtes Patentdokument | Datum der Veröffentlichung | Mitglied(er) der Patentfamilie | Datum der Veröffentlichung |
|---|---|---|---|
| JP 2005308099 A | 04-11-2005 | KEINE | |
| EP 0070662 A1 | 26-01-1983 | AU 8568882 A | 27-01-1983 |
| | | JP 58024650 A | 14-02-1983 |
| DE 10359625 A1 | 15-07-2004 | JP 2004197906 A | 15-07-2004 |
| | | KR 20040055633 A | 26-06-2004 |
| | | US 2004118112 A1 | 24-06-2004 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0070662 A1